(19) Europäisches Patentamt
European Patent Office
Office européen des brevets

(11) Veröffentlichungsnummer: **0 010 669**
**B1**

(12) # EUROPÄISCHE PATENTSCHRIFT

(45) Veröffentlichungstag der Patentschrift: **19.08.81**

(51) Int. Cl.³: **C 08 K 5/42**, C 08 K 5/23, C 09 B 63/00

(21) Anmeldenummer: **79103959.7**

(22) Anmeldetag: **15.10.79**

(54) **Verfahren zum Färben thermoplastischen Kunststoffs und Pigment- oder Farbkonzentrate für dieses Verfahren.**

(30) Priorität: **17.10.78 DE 2845073**

(43) Veröffentlichungstag der Anmeldung: **14.05.80 (Patentblatt 80/10)**

(45) Bekanntmachung des Hinweises auf die Patenterteilung: **19.08.81 Patentblatt 81/33**

(84) Benannte Vertragsstaaten: **BE CH DE FR GB IT NL**

(56) Entgegenhaltungen:
**DE - A - 2 060 557**
**DE - A - 2 616 981**
**FR - A - 2 316 276**
**GB - A - 516 417**
**GB - A - 691 482**
**GB - A - 1 353 763**
**US - A - 2 189 806**
**US - A - 2 225 665**
**US - A - 4 002 603**

(73) Patentinhaber: **BASF Aktiengesellschaft**
**Carl-Bosch-Strasse 38**
**D-6700 Ludwigshafen (DE)**

(72) Erfinder: **Guenthert, Paul, Dr. Dipl.-Chem.**
**Alfred-Delp-Strasse 2**
**D-6707 Schifferstadt (DE)**
Erfinder: **Henning, Georg, Dr. Dipl.-Chem.**
**Thorwaldsenstrasse 3**
**D-6700 Ludwigshafen (DE)**

**EP 0 010 669 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Imprimerie Jouve, 17, rue du Louvre, 75001 Paris, France

Verfahren zum Färben von thermoplastischen Kunststoffs und Pigment-oder Farbkonzentrate für dieses Verfahren

Die Erfindung betrifft die Verwendung von Verbindungen der allgemeinen Formel I

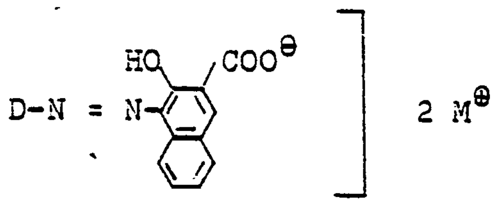 ,

in der D ein Rest der Formel

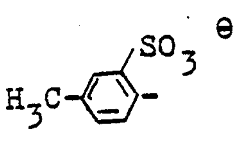 ,

IIa

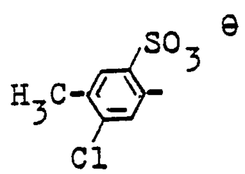 oder

IIb

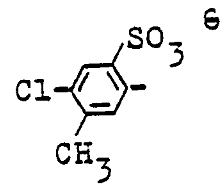

IIc

und $M^{\oplus}$ $Li^{\oplus}$, $Na^{\oplus}$, $K^{\oplus}$ oder $NH_4^{\oplus}$ sind,
zum Färben von thermoplastischen Kunststoffen.

Überraschenderweise wurde gefunden, daß sich die üblicherweise nur als Zwischenprodukte hergestellten Verbindungen der Formel I vorzüglich zum Färben von thermoplastischen Kunststoffen in der Masse eignen. Als thermoplastische Kunststoffe kommen dabei insbesondere Polyolefine, wie Polyäthylen oder Polypropylen, Weich-PVC, Copolymerisate aus Vinylchlorid und Vinylacetat oder Vinylchlorid und Vinyläthern, Polystyrol und Copolymerisate des Styrols in Betracht. Weiterhin sind Hart-PVC, Polyester oder Polyamid zu nennen.

Die Verbindungen werden in den für die Kunststoffeinfärbung üblichen Konzentrationen, d.h. ungefähr 0,01 bis 5 % verwendet, und ergeben brillante transparente bis deckende Färbungen, die sich überraschenderweise durch sehr gute Weichmacherechtheit und Temperaturstabilität und ausreichende Lichtechtheit auszeichnen. Gegenüber den üblicherweise verwendeten Erdalkali- und Mangansalzen ergibt sich der Vorteil einer Erweiterung des Farbtonbereiches und/oder der toxikologischen Unbedenklichkeit. Dies gilt auch gegenüber den aus der DE-A 26 29 639 bekannten Metallverbindungen. Gleichzeitig ist die Herstellung der erfindungsgemäß zu verwendenden Verbindungen einfacher.

Die Verbindungen der Formel I eignen sich ferner vorzüglich zur Herstellung von Färbekonzentraten, d. h. Mischungen von Kunststoff und Farbstoff mit einem sehr hohen Gehalt an Farbstoff, beispielsweise 10 bis 60, vorzugsweise 20 bis 40 %. Als Kunststoffe eignen sich dabei vorzugsweise Polyäthylen und PVC, wobei das PVC in der Regel einen Vinyläther einpolymerisiert enthält. Einzelheiten der Herstellung von Pigment- oder Färbekonzentraten können den Beispielen entnommen werden.

Die Verbindungen der Formel I erhält man nach den bekannten Methoden durch Diazotierung und Kupplung. Bevorzugt verwendet werden die Ammonium- und insbesondere die Natriumsalze und weiterhin die Verbindungen mit

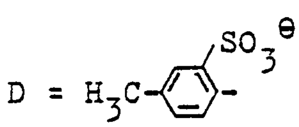 und 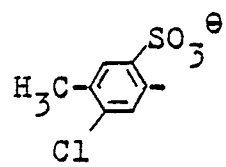

In den folgenden Beispielen beziehen sich Angaben über Teile und Prozente, sofern nicht anders vermerkt, auf das Gewicht.

## Beispiel 1

18,7 Teile p-Toluidinsäure-3 und 19,5 Teile β-Oxynaphthoesäure werden in 400 Teilen Wasser und 17 Teilen Natronlauge (50 %ig) gelöst. Nach Zugabe von 110 Teilen 5 n-Salzsäure und 250 Teilen Eis wird bei 0-5 °C mit 35 Teilen 3 n-Natriumnitritlösung diazotiert. Man läßt 30 Minuten bei 0-5 °C nachrühren, zerstört mit Amidosulfonsäure den Nitritüberschuß und stellt mit 20 %iger Natronlauge auf pH 10,3 ein.

Die Mischung wird 1 Stunde bei Raumtemperatur und 2 Stunden bei 70 °C gerührt. Das enstandene Natriumsalz wird abgesaugt, mit Wasser chloridfrei gewaschen und getrocknet. Man erhält 42 Teile eines gelbstichig-roten Pulvers.

## Beispiele 2-9

A Teile Amin der Formel IIIa-c und 19,5 Teile β-Oxynaphthoesäure werden in 400 Teilen Wasser und B Teilen einer C %igen wäßrigen Lösung eines Hydroxids MOH gelöst. Nach Zugabe von 110 Teilen 5 n-Salzsäure und 250 Teilen Eis wird bei 0-5 °C mit D Teilen einer wäßrigen 5 n-Lösung des Nitrits der Formel R-$NO_2$ diazotiert. Man läßt 30 Minuten bei 0-5 °C nachrühren, zerstört mit Amidosulfonsäure den Nitritüberschuß und stellt mit der C %igen wäßrigen Lösung des Hydroxids MOH auf pH 10,3 ein.

Die Mischung wird 1 Stunde bei Raumtemperatur und 2 Stunden bei 70 °C gerührt. Das enstandene Pigment wird abgesaugt, mit Wasser chloridfrei gewaschen und getrocknet. Man erhält dabei E Teile rotes Pulver.

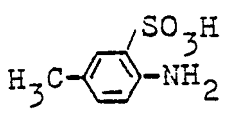
IIIa

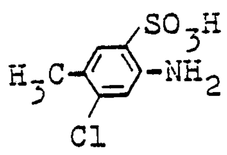
IIIb

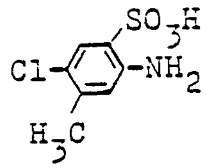
IIIc

| Beispiel | A | Amin | B | C | M | D | R | E |
|---|---|---|---|---|---|---|---|---|
| 2 | 18,7 | III a | 53 | 10 | Li | 26 | Na | 38 |
| 3 | 18,7 | III a | 46,4 | 30 | K | 27 | K | 44 |
| 4 | 22,2 | III b | 53 | 10 | Li | 26 | Na | 41 |
| 5 | 22,2 | III b | 30 | 30 | Na | 26 | Na | 44 |
| 6 | 22,2 | III b | 42 | 30 | K | 27 | K | 47 |
| 7 | 22,2 | III c | 53 | 10 | Li | 26 | Na | 42 |
| 8 | 22,2 | III c | 30 | 30 | Na | 26 | Na | 44 |
| 9 | 22,2 | III c | 48 | 30 | K | 27 | K | 47 |

## Beispiel 10

18,7 Teile p-Toluidinsäure-3 und 19,5 Teile β-Oxynaphthoesäure werden in 400 Teilen Wasser und 25 Teilen 25 %igem Ammoniak gelöst. Nach Zugabe von 110 Teilen 5 n-Salzsäure und 250 Teilen Eis wird bei 0 bis 5 °C mit 40 Teilen 3 n-Ammoniumnitritlösung diazotiert. Man läßt 30 Minuten bei 0-5 °C nachrühren, zerstört mit Amidosulfonsäure den Nitritüberschuß und stellt mit 25 %igem Ammoniak einen pH von 8,5-9 ein.

Der Ansatz wird 1 Stunde bei Raumtemperatur und 2 Stunden bei 70 °C gerührt. Das entstandene Pigment wird abgesaugt, mit Wasser chloridfrei gewaschen und getrocknet. Man erhält dabei 40 Teile rotes Pulver.

## Beispiel 11

Man verfährt wie in Beispiel 10, verwendet jedoch statt 18,7 Teile p-Toluidinsäure-3 22,2 Teile 1-Amino-3-chlor-4-methylbenzol-6-sulfonsäure. Man erhält dabei 43 Teile rotes Pulver.

## Beispiel 12

Man verfährt wie in Beispiel 10, verwendet jedoch statt 18,7 Teile p-Tuluidinsäure-3 22,2 Teile 1-Amino-3-methyl-4-chlorbenzol-6-sulfonsäure. Dabei erhält man 42 Teile rotes Pulver.

Beispiel 13

Weich-PVC; 0,1 %ige Färbung

0,05 Teile Farbstoff, erhalten nach Beispiel 1, werden mit 50 Teilen einer Mischung aus 65 Teilen Polyvinylchloridpulver, 35 Teilen Diäthylhexylphthalat und 2 Teilen Dibutyl-Zinn-bis-thioglykolsäurehexylester auf einem Mischwalzwerk bei 150 bis 160 °C homogenisiert (ca. 8 Minuten), zu Fellen gewalzt und auf einem Kalanderwalzwerk geglättet. Man erhält leuchtend gelbstichig-rot gefärbte, stark deckende Felle mit ausgezeichneter Weichmacherechtheit.

Verwendet man statt der Farbstoffes des Beispiels 1 die Farbstoffe der Beispiele 2-12, so erhält man analoge Färbungen.

Beispiel 14

Weich-PVC; (Verschnitt)

0,25 Teile Farbstoff, erhalten nach Beispiel 5, werden mit 2,5 Teilen Titandioxid (Rutilware) und 50 Teilen einer Mischung aus 65 Teilen Polyvinylchloridpulver, 36 Teilen Diäthylhexylphthalat und 2 Teilen Dibutyl-Zinn-bis thioglykolsäurehexylester auf einem Mischwalzwerk bei 150 bis 160 °C homogenisiert (ca. 8 Minuten), zu Fellen gewalzt und auf einem Kalanderwalzwerk geglättet. Man erhält gelbstichig-rot gefärbte Felle mit vorzüglicher Weichmacherechtheit.

Verwendet man statt des Farbstoffes des Beispiels 5 die Farbstoffe der Beispiele 1-4 und 6-12, so erhält man analoge Färbungen.

Beispiel 15

Weich-PVC; 2:1 (Vollton)

Verfährt man wie in Beispiel 14, verwendet aber statt 0,25 Teilen Farbstoff 0,5 Teile und statt 2,5 Teilen Titandioxid 0,25 Teile, so erhält man brillante rot gefärbte Felle mit ausgezeichneter Weichmacherechtheit.

Beispiel 16

Polyäthylen 0,05 %ig

0,05 Teile Farbstoff, erhalten nach Beispiel 10, werden in einem Trommelmischer mit 100 Teilen Polyäthylenpulver (Hochdruckware) trocken gemischt. Das Gemisch wird auf einer Schneckenpresse bei einer Zylindertemperatur von 160 bis 200 °C geschmolzen und homogenisiert. Die gefärbte plastische Masse wird durch Heißabschlagen am Düsenkopf oder durch Ausziehen von Fäden unter Kühlung granuliert. Das so erhaltene Granulat wird anschließend in einer Spritzgußvorrichtung bei 200 °C zu Formkörpern verspritzt oder auf Pressen zu beliebigen Körpern gepreßt. Man erhält leuchtend rote Preßlinge.

Analoge Färbungen erhält man, wenn man statt des Farbstoffs des Beispiels 10 die der Beispiele 1-9 und 11-12 verwendet.

Beispiel 17

Polyäthylen 1:10 (Verschnitt)

0,1 Teile Farbstoffe des Beispiels 8 werden mit 100 Teilen Polyäthylenpulver (Hochdruckware) und 1 Teil Titandioxid (Rutilware) wie in Beispiel 16 angegeben, gemischt und zu Formkörpern verarbeitet. Man erhält rote Preßlinge.

Bei Verwendung der Farbstoffe der Beispiele 1-7 und 9-12 statt des Farbstoffs des Beispiels 8 erhält man analoge Färbungen.

Beispiel 18

Polyäthylen-Pigmentpräparation

30 Teile Farbstoff, erhalten nach Beispiel 11, werden mit 70 Teilen Polyäthylenpulver gemischt, in einem heizbaren Kneter bei 140 °C während einer Stunde homogenisiert und anschließend granuliert. Man erhält eine leuchtend rote Pigmentpräparation.

Analoge Präparationen erhält man, wenn man statt des Farbstoffes des Beispiels 11 die Farbstoffe der Beispiele 1-10 und 12 verwendet.

Beispiel 19

Polypropylen 0,1 %ig

0,1 Teile Farbstoff, erhalten nach Beispiel 1, werden in einem Trommelmischer mit 100 Teilen Polypropylenpulver trocken gemischt. Das Gemisch wird auf einer Schneckenpresse bei einer Zylindertemperatur von 240 °C geschmolzen und homogenisiert. Die gefärbte plastische Masse wird durch Heißabschlagen am Düsenkopf oder durch Ausziehen von Fäden granuliert. Das so erhaltene Granulat wird anschließend in einer Spritzgußvorrichtung bei 200 °C zu Formkörpern verspritzt oder auf Pressen zu beliebigen Körpern gepreßt. Man erhält dabei leuchtend rote Preßlinge. Analoge Preßlinge erhält man, wenn man statt des Farbstoffes des Beispiels 1 Farbstoffe der Beispiele 2-12 verwendet.

Beispiel 20

Hart-PVC; 0,1 %ige Färbung

0,1 Teile Farbstoff, erhalten nach Beispiel 7, werden mit 100 Teilen Polyvinylchloridpulver (Suspensions- oder Emulsionsware) und 2 Teilen Dibutyl-Zinn-bis thioglykol-säurehexylester auf einem Mischwalzwerk bei 150 bis 160 °C homogenisiert (ca. 8 Minuten).

Die erhaltenen Walzfelle werden auf einer Plattenpresse bei 140 °C mit ca. 0,4 kg/cm$^2$ zu Platten gepreßt. Man erhält rote Preßlinge. Statt des Farbstoffs des Beispiels 7 können auch die Farbstoffe der Beispiele 1-6 und 8-12 verwendet werden.

Beispiel 21

Hart-PVC; 1:10 (Verschnitt)

0,1 Teile Farbstoffe, erhalten nach Beispiel 2, werden mit 100 Teilen Polyvinylchloridpulver (Suspensions- oder Emulsionsware), 1 Teil Titandioxid (Rutilware) und 2 Teilen Dibutyl-Zinn-bis-thioglykolsäurehexylester auf einem Mischwalzwerk, wie in Beispiel 12 beschrieben, homogenisiert und anschließend zu Platten gepreßt. Man erhält leuchtend rote Preßlinge.

Verwendet man statt des Farbstoffs des Beispiels 2 die Farbstoffe der Beispiele 1 und 3-12, so erhält man analoge Färbungen.

Beispiel 22

Hart-PVC ; 2:1 (Vollton)

1 Teil Farbstoff, erhalten nach Beispiel 1, wird mit 100 Teilen Polyvinylchloridpulver (Suspensions- oder Emulsionsware), 0,5 Teilen Titandioxid (Rutilware) und 2 Teilen Dibutyl-Zinn-bis-thioglykolsäurehexylester auf einem Mischwalzwerk bei 150 bis 160 °C homogenisiert (ca. 8 Minuten). Die erhaltenen Walzfelle werden auf einer Plattenpresse bei 140 °C mit ca. 0,4 kg/cm$^2$ zu Platten gepreßt. Man erhält leuchtend rot gefärbte Preßlinge.

Analoge Färbungen werden erhalten, wenn man statt des Farbstoffs des Beispeils 1 die Farbstoffe der Beispiele 2-12 verwendet.

Beispiel 23

Polystyrol 0,05 %ig

0,05 Teile Farbstoff, erhalten nach Beispiel 1, werden in einem Trommelmischer mit 100 Teilen gemahlenem Polystyrol-Blockpolymerisat trocken gemischt. Das Gemisch wird auf einer Schneckenpresse bei einer Zylinder-Temperatur von 200 bis 250 °C geschmolzen und homogenisiert. Die gefärbte plastische Masse wird durch Heißabschlagen am Düsenkopf oder durch Ausziehen von Fäden unter Kühlung granuliert. Das so erhaltene Granulat wird anschließend in einer Spritzgußvorrichtung bei 200 bis 250 °C zu Formkörpern verspritzt oder auf Pressen zu beliebigen Körpern gepreßt. Man erhält leuchtend rote, deckende Spritzlinge.

Anstelle von Polystyrol-Blockpolymerisat kann auch ein Polystyrol-Emulsionspolymerisat oder Suspensionspolymerisat bzw. Mischpolymerisat mit Butadien und Acrylnitril oder Acrylestern verwendet werden. Desgleichen können statt des Farbstoffes des Beispiels 1 die Farbstoffe der Beispiele 2-12 verwendet werden.

Beispiel 24

Polystyrol 1:10 (Verschnitt)

0,1 Teile Farbstoff des Beispiels 5 werden mit 100 Teilen gemahlenem Polystyrol-Blockpolymerisat und 1 Teil Titandioxid, wie in Beispiel 17 angegeben, gemischt. Das Gemisch wird geschmolzen, homogenisiert und granuliert. Das so erhaltene Granulat wird zu Formkörpern verspritzt oder gepreßt (Verarbeitungstemperatur 200 bis 250 °C). Man erhält leuchtend rot gefärbte Spritz- oder Preßlinge.

Analoge Färbungen erhält man, wenn man statt des Farbstoffs des Beispiels 5 die Farbstoffe der Beispiele 1-4 und 6-12 verwendet.

Beispiel 25

PVC-Konzentrat

In einem vorbeheizten Stempelkneter werden 180 Teile Copolymerisat aus Vinylchlorid und

Vinylisobutyläther bei einer Temperatur von ungefähr 120 bis 150 °C plastifiziert. Zu der plastischen Masse gibt man portionsweise 480 Teile eines 25 %igen wäßrigen Preßgutes des Farbstoffes des Beispiels 1 und knetet, bis das Wasser verdampft ist. Nach dem Abkühlen wird zerkleinert und mit einer Stiftmühle gemahlen. Man erhält eine leuchtend rote Pigmentpräparation.

Analoge Präparationen werden auch mit den anderen Farbstoffen enhalten.

Beispiel 26

Vinylchlorid-acetat-Konzentrat

200 Teile eines Copolymerisates auf Basis Vinylchlorid und Vinylacetat werden im Kneter bei 90 bis 110 °C plastifiziert. Man gibt nun portionsweise 133 Teile Farbstoff, erhalten nach Beispiel 8, zu und knetet 1 Stunde bei 125 bis 130 °C, wobei zu Beginn geringe Mengen Wasser zugegeben werden. Nach dem Abkühlen wird zunächst grob zerkleinert, dann zu einem feinen brillant roten Pulver vermahlen.

Ähnliche Konzentrate erhält man, wenn man statt des Farbstoffes des Beispiels 8 die Farbstoffe der Beispiele 1 bis 7 und 9 bis 12 einsetzt.

**Ansprüche**

1. Verfahren zum Färben von thermoplastischen Kunststoffen, mit Verbindungen der allgemeinen Formel

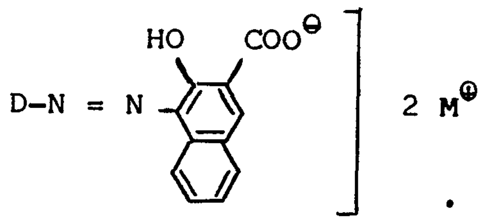 ,

in der D ein Rest der Formel

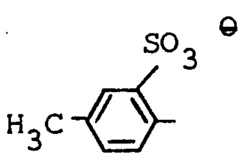 , 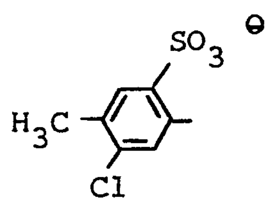 oder 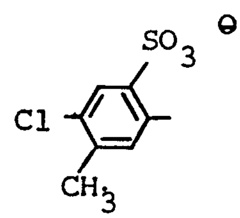 und

$M^{\oplus}$ ein Kation bedintet, *dadurch gekennzeichnet,* daß man Verbindungen mit dem Kation $M^{\oplus} = Li^{\oplus}$, $Na^{\oplus}$, $K^{\oplus}$ oder $NH_4^{\oplus}$ verwendet.

2. Verfahren gemäß Anspruch 1, *dadurch gekennzeichnet,* daß man Verbindungen mit dem Kation $M^{\oplus} = Na^{\oplus}$ oder $NH_4^{\oplus}$ verwendet.

3. Pigment- oder Färbekonzentrate, enthaltend Kunststoff und Farbstoffe gemäß der Formel in Anspruch 1, wobei der Farbstoff in Konzentrationen von 10 bis 60, vorzugsweise 20 bis 40 % vorliegt.

4. Konzentrate gemäß Anspruch 3, enthaltend als Kunststoffe Polyäthylen oder PVC.

**Claims**

1. A process for the coloring of thermoplastics with a compound of the general formula

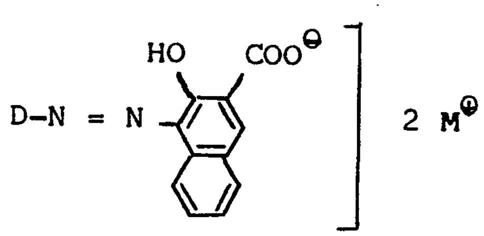 ,

where D is a radical of the fomula

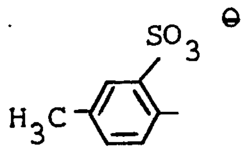, 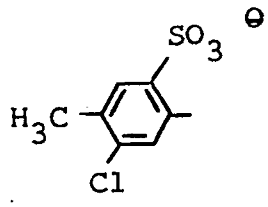 or 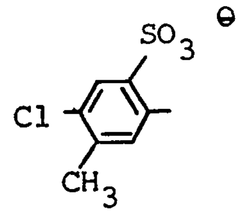 and

$M^{\oplus}$ is a cation, *characterized in that* a compound with the cation $M^{\oplus}$ = $Li^{\oplus}$, $Na^{\oplus}$, $K^{\oplus}$ or $NH_4^{\oplus}$ is used.

2. A process as claimed in claim 1, *characterized in that* a compound with the cation $M^{\oplus}$ = $Na^{\oplus}$ or $NH_4^{\oplus}$ is used.

3. A pigment masterbatch or dye masterbatch, which contains a plastic and a colorant of the formula given in claim 1, the concentration of the said colorant being from 10 to 60 %, preferably from 20 to 40 %.

4. A concentrate as claimed in claim 3, which contains polyethylene or PVC as the plastic.

**Revendications**

1. Procédé pour la coloration de matières synthétiques thermoplastiques avec des composés de formule générale

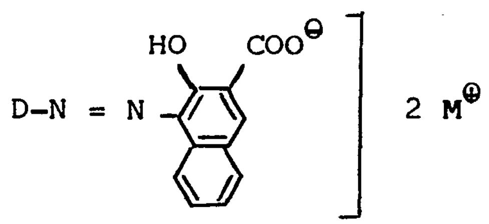 ,

dans laquelle D est un radical de formule

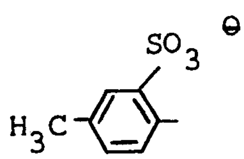, 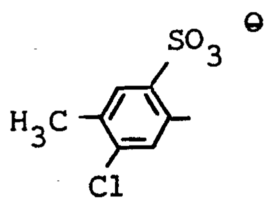 ou 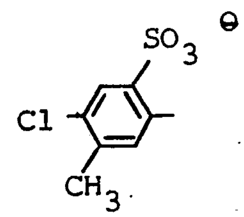 et

$M^{\oplus}$ répresente un cation, caractérisé en ce qu'on utilise des composés où $M^{\oplus}$ = $Li^{\oplus}$, $Na^{\oplus}$, $K^{\oplus}$ ou $NH_4^{\oplus}$.

2. Procédé selon la revendication 1, caractérisé en ce qu'on utilise des composés avec le cation $M^{\oplus}$ = $Na^{\oplus}$ ou $NH^{\oplus}_4$.

3. Concentrés de pigments ou masterbatches, contenant une matière synthétique et des colorants selon la formule de la revendication 1, le colorant étant présent dans des concentrations de 10 à 60 %, de préférence de 20 à 40 %.

4. Concentrés selon la revendication 3, contenant, en tant que matière synthétique, un polyéthylène ou un PVC.